# EUROPEAN PATENT SPECIFICATION

(11) **EP 3 934 783 B1**
(45) Date of publication and mention of the grant of the patent: **22.03.2023**
(21) Application number: 20710572.7
(22) Date of filing: 26.02.2020
(51) Int. Cl.: B01D 25/12, B01D 25/172, B01D 25/19

(54) **HORIZONTAL PLATE PRESSURE FILTER**
HORIZONTALER PLATTENDRUCKFILTER
FILTRE SOUS PRESSION À PLAQUE HORIZONTALE

(30) Priority: 06.03.2019 WO PCT/CN2019/077208
(43) Date of publication of application: 12.01.2022
(73) Proprietor: Metso Outotec Finland Oy, 33900 Tampere (FI)
(72) Inventor: FOSTER, Geoffrey, Suzhou, Jiangsu 215021 (CN); YAN, Huan, Shanghai, 201209 (CN); LI, Zhihong, Shanghai, 201201 (CN)
(74) Representative: Boco IP Oy Ab
(86) International application number: PCT/FI2020/050122
(87) International publication number: WO 2020/178476

(56) References cited:
- WO-A2-03/068271
- GB-A- 2 073 040
- US-A- 3 696 930
- US-A- 3 981 802

## Description

### FIELD OF THE DISCLOSURE

The present disclosure relates to pressure filters, and more particularly to horizontal plate pressure filters, in which filter chambers are formed between horizontally extending superimposed filter plates. Such filters are also known as tower presses.

### BACKGROUND OF THE DISCLOSURE

Horizontal plate pressure filters have a plurality of horizontally extending superimposed filter plates, between which filter chambers are formed. During operation the filter plates are pressed against each other to seal filter chambers between the filter plates. Slurry is then fed into the filter chambers and filtrate is separated therefrom while the solid contents of the slurry form filter cakes within the filter chambers. Subsequently, the filter plates are moved away from each other to open the filter chambers so that the filter cake may be discharged therefrom, and further moved towards each other to close the filter chamber again. This sequence is then repeated.

Typically, the movement of the filter plates away and towards each other for opening and closing of the filter chambers is actuated by a separate set of actuators than those used for pressing the filter plates against each other sealing the filter chamber. This is because the pressure and force required for sealing the filter chambers is much greater that that required for opening and closing the filter chambers, and the actuators must be correspondingly dimensioned for each purpose. Conventionally, both set of actuators have been hydraulically operated, because hydraulic actuators offer both a good force-weight - ratio advantageous for achieving the required sealing pressure and good position control required for opening and closing the filter chambers.

However, hydraulic actuators inherently pose some disadvantages. Particularly, hydraulic actuators and the associated system are prone contamination of the surrounding from the hydraulic oil and are additionally susceptible to malfunction due to any impurities within the hydraulics system. Additionally, hydraulic actuators, particularly cylinders most commonly used for linear movement such as those associated to horizontal filter presses, have a limited speed caused by the seals used. This limits the speed at which the filter plates can be moved away and towards from each other, and consequently, hinder the cycle time of the associated horizontal plate pressure filter.

For example, publications US 3 981 802 A and WO 03/068271 A concern horizontal plate pressure filters.

### BRIEF DESCRIPTION OF THE DISCLOSURE

An object of the present disclosure is to provide a horizontal plate pressure filter so as to alleviate the above disadvantages.

The object of the disclosure is achieved by a horizontal plate pressure filter which is characterized by what is stated in the independent claim. The preferred embodiments of the disclosure are disclosed in the dependent claims.

The disclosure is based on the idea of having an opening actuator arrangement that comprises an electric motor, which is used for providing the opening and closing movement. Moreover, an opening mechanism is coupled to the opening actuator arrangement and configured to mechanically transmit the opening movement and the closing movement so as to move a head plate away from, and respectively towards an uppermost filter plates.

That is, the filter plates are moved way and towards form each other, thereby closing and opening the filter chambers by the opening and closing movement of the electric motor(s) of the opening actuator arrangement, which is mechanically operationally transmitted by the opening mechanism.

As a result, the problems associated to hydraulic systems are effectively eliminated, while maintaining good movement control over the head plate and filter plates. Simultaneously, this enables an increased speed of the opening and closing movement of the filter plates, thereby improving the overall cycle time of the horizontal plate pressure filter.

### BRIEF DESCRIPTION OF THE DRAWINGS

In the following the disclosure will be described in greater detail by means of preferred embodiments with reference to the accompanying drawings, in which
Fig. 1 schematically illustrates a horizontal plate pressure filter according to an embodiment of the present disclosure as seen from a lateral side;
Fig. 2 schematically illustrates the horizontal plate pressure filter of Fig. 1 as seen from above;
Fig. 3 schematically illustrates the horizontal plate pressure filter of Fig. 1 as seen from an end side;
Fig. 4 schematically illustrates a pulley arrangement of an opening mechanism according to the embodiment illustrated in Fig. 1;
Fig. 5 schematically illustrates a horizontal plate pressure filter according a further embodiment of the present disclosure as seen from an end side;
Fig. 6 schematically illustrates a pulley arrangement of an opening mechanism according to the embodiment illustrated in Fig. 5;
Fig. 7 schematically illustrates a horizontal plate pressure filter according to a further embodiment of the present disclosure as seen from a lateral side;
Fig. 8 schematically illustrates the horizontal plate pressure filter of Fig. 7 as seen from above;
Fig. 9 illustrates an alternative opening actuator arrangement with two electric motors in connection with a horizontal plate pressure filter according to a further embodiment of the present disclosure, as seen from above, and
Fig. 10 illustrates an alternative opening actuator arrangement with four electric motors in connection with a horizontal plate pressure filter according to a further embodiment of the present disclosure.

### DETAILED DESCRIPTION OF THE DISCLOSURE

According to the disclosure a horizontal plate pressure filter 1 is provided.

The plate pressure filter comprises a plurality of superimposed filter plates 2 for forming a filter chamber between at least two adjacent filter plates, and a head plate 3 arranged above the uppermost filter plate.

The plate pressure filter 1 further comprises an opening actuator arrangement 5 for providing an opening movement and a closing movement. In the context of this disclosure, the term actuator refers to device that produces movement in order to move another entity. entity Particularly, the opening actuator arrangement 5 comprises an electric motor 5a that produces the opening movement and the closing movement. Naturally, more than one electric motors 5a may be provided.

Preferably, but not necessarily, the electric motor 5a may be provided as an induction motor, enabling a totally enclosed, reliable and robust operation. If such an electric motor 5a is used, the opening actuator arrangement 5 may preferably, but not necessarily be provided, for example, with a variable-frequency drive, suitably controlled by PLC-unit, for driving the electric motor 5a. Such an arrangement would provide precise and flexible position and movement control. Naturally, other types of suitable motors, drives and controls may be used.

Furthermore, the opening actuator arrangement may be equipped with a gearbox couple to the electric motor.

The plate pressure filter 1 further comprises an opening mechanism 6 coupled to the opening actuator arrangement 5 and to the head plate 3. The opening mechanism is configured to mechanically transmit the opening movement and the closing movement between the opening actuator arrangement 5 and the head plate 3, so as to move the head plate 3 away from, and respectively towards the uppermost filter plate 2. It should be noted that particularly in the context of this disclosure the phrase 'mechanically transmit' does not encompass, e.g. hydraulic power transmission. Details and variants of the opening mechanism are discussed in more detail in connection with further embodiments of the present disclosure.

The plate pressure filter 1 further comprises a limited clearance arrangement 2a coupled between the head plate 3 and the uppermost filter plate 2, and respectively, between adjacent filter plates 2. The limited clearance arrangement is configured to allow the head plate 3 to abut the uppermost filter plate 2, and respectively, adjacent filter plates 2 to abut each other when moved towards each other. The limited clearance arrangement is further configured to allow a limited clearance to be formed between the head plate 3 and the uppermost filter plate 2, and respectively, between adjacent filter plates 2 when moved away from each other.

The limited clearance arrangement 2a could be implemented, for example by attaching the head plate 3 to the adjacent filter plate 2, and correspondingly adjacent filter plates 2 to each other, with a flexible member such as a cable, chain wire, rope or belt. Alternatively, the head plate 3 may be attached to the adjacent filter plate 2, and correspondingly adjacent filter plates 2 using a linkage 2a that pivots towards and away from the head plate 3 or filter plate 2 when moved towards away from each other respectively.

The plate pressure filter 1 further comprises a vertically extending guide arrangement 10 for laterally supporting the filter plates and the head plate, and for enabling the filter plates 2 and the head plate 3 to move away and towards from each other along said guide arrangement. That is, the guide arrangement guides the head plate 3 and the filter plates 2 along a vertical path during the opening movement and closing movement thereof, so as to maintain the head plate 3 and filter plates 2 aligned. For example, vertically extending guide rails and corresponding guide rollers or other counterparts on the plates 2, 3 could be used.

Moreover, in the context of this disclosure, the lateral side is used to describe sides of the plate pressure filter transverse to the discharging direction of the filter cake (i.e. transverse to the running direction of the filter medium. Correspondingly, the term end side is used describe the sides of the plate pressure filter in the discharge direction of the filter cake (i.e. running direction of the filter medium).

The plate pressure filter 1 further comprises a support structure for selectively rigidly securing the head plate 3 thereto at least at a closed position of the head plate 3. The closed position of the head plate corresponds to its position when the filter chambers are closed and sealed. Most suitably, the support structure comprises at least two vertically extending support columns 4 positioned at opposite lateral sides of the head plate 3.

The plate pressure filter 1 further comprises a tail plate 8 arranged below the lowermost filter plate 2, and a press actuator arrangement 9 for pressing the tail plate 8 towards the filter plates 2 so as to compress the filter plates 2 between the head plate 3 and tail plate 8 in order to seal said filter chambers.

Particularly, the press actuator arrangement 9 is separate from the opening actuator arrangement 5. The press actuator arrangement 9 may comprise, for example a hydraulic or electric actuator. Particularly, the drawbacks related to hydraulic systems do not pose similar problems at the press actuator arrangement, because the associated movement is much shorter than that required from the opening actuator arrangement. Moreover, contamination of the hydraulic oil is not a problem, because the press actuator arrangement is below the filter plates 2. Consequently, any leaked oil would not come into contact with the filtrate or filter cake, or other components of the plate pressure filter 1.

In a horizontal plate pressure filter according to a further embodiment of the present disclosure, the support structure comprising at least four vertically extending support columns 4. Suitably, said support columns 4 are provided as opposing pairs at opposite lateral sides of the head plate plate 3.

In a horizontal plate pressure filter according to a furhter embodiment of the present disclosure, the opening mechanism 6 extends vertically at a plurality of distinct positions, preferably along the support columns 4. In other words, the head plate 3 is coupled to the opening mechanism 6 at a plurality of distinct positions. As the opening actuator arrangement 5 resides above the uppermost position of the head plate 3, the opening mechanism 6 extends vertically.

In a horizontal plate pressure filter 1 according to a further embodiment of the present disclosure, the filter 1 comprises further comprising a locking arrangement for engaging the head plate 3 with the support structure 4 so as to selectively secure said head plate 3 to the support structure 4 at least at the closed position of the head plate 3. This enables the filter plates 2 to be pressed against each other between the tail plate 8 and the head plate 3 without the opening mechanism arrangement 6 being configured to maintain the head plate 3 in place against the pressing force of the press actuator arrangement 9.

For example, the locking arrangement may comprise, at the head plate, a locking pin 3a configured to engage with a corresponding recess 4a at the support structure, suitably on a support column 4. The locking arrangement may preferably comprise a plurality of locking pins 3a an corresponding recesses 4a, preferably at each support column 4.

Suitably, the locking arrangement also comprises a stopper corresponding to the closed position of the head plate 3, against which against which the head plate 3 is lowered during the closing movement. This ensures that the closed position of the head plate is always the same, and that the locking arrangement can reliably engage so as to secure the head plate 3.

In a horizontal plate pressure filter 1 according to a further embodiment of the present disclosure, the opening mechanism 6 comprises an elongate flexible member 6c configured to mechanically transmit the opening movement and the closing movement between the opening actuator arrangement 5 and the head plate 3. In the context of this disclosure, the term flexible member is used to describe an element flexible and curved in compression but linear, rigid, and load-bearing in tension. Examples of such flexible elements include rope, wire, chain, cable and belt.

In a horizontal plate pressure filter 1 according to a further embodiment of the present disclosure, in which the opening mechanism 6 comprises an elongate flexible member 6c, the opening mechanism 6 comprises one or more drums 6d rotatable by the opening actuator arrangement 5. Moreover, one or more elongate flexible elements 6c are coupled to each drum 6d so as to wind therearound during an opening movement of the opening actuator arrangement 5, and unwind therefrom during a closing movement of the opening actuator arrangement 5. The flexible elements 6c' are further operationally coupled to the head plate 3 so as to transmit the opening movement and the closing movement between the opening actuator arrangement 5 and the head plate 3. That is, the flexible element does no need to directly attached to the head plate 3, but could be coupled thereto via an intermediate element, such as a pulley.

Moreover, the elongate flexible element 6c is suitably attached at either or both of its ends with a turnbuckle allowing adjustment and facilitating balancing length, if more than one elongate flexible members 6c are used. Most suitably, the elongate flexible member 6c is fixed to the drum 6d at one end, the other end being attached to fixed point of the horizontal plate pressure filter 1, preferably to the support structure, with a turnbuckle.

As a further alternative, the flexible element 6c could be coupled to the drum 6d at an intermediate portion thereof, and coupled to the head plate 3 by both distal portions of the element 6c, suitably at different distinct positions. In such a case, the flexible element 6c should be re-routed at drum 6d such that both distal ends wind around the drum 6d during an opening movement and unwind during a closing movement.

Preferably, but not necessarily, the opening mechanism 6 further comprises a first pulley 6a corresponding to each distinct position, said first pulley 6a' being positioned above an uppermost position of the head plate 3. In such a case, the one or more flexible elements 6c extend from the drum 6d about the first pulley 6a towards the head plate 3.

Additionally, the opening mechanism 6 may further comprises a second pulley 6b corresponding to each distinct position, said second pulley 6b being positioned below the first pulley 6a and coupled to the head plate 3. In such a case, the at least one flexible element 6c is suitably coupled to the head plate 3 via the second pulley 6b.

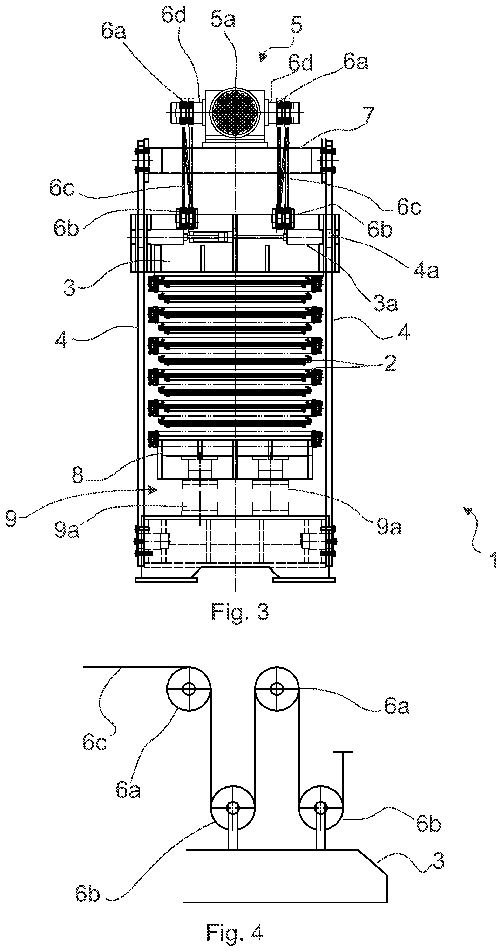

It should be noted, however that there could be more than one first pulleys 6a and second pulleys 6b arranged at each distinct position. For example, Fig. 4 illustrates a pulley arrangement, in which tow first pulleys 6a are arranged above two second pulleys 6b, the latte being attached to the head plate 3. In this arrangement the flexible element 6c runs, in sequence from the drum 6d to the first pulley, to the second pulley 6b, to a further first pulley 6a, to a further second pulley 6b, and finally to a fixed point. It should be noted, that either or both of the first 6a pulleys and second 6b pulleys could be arranged in a single block, in which a pulley along with a further corresponding pulley are arranged side-by side.

In a horizontal plate pressure filter 1 according to an alternative further embodiment of the present disclosure, in which the opening mechanism 6 comprises an elongate flexible member 6c, the one or more flexible element may be 6c provided as a chain 6c'. The chain extending, preferably at each distinct position, between and around an upper sprocket 6a' and a lower sprocket 6b'. Additionally, the chain 6c' is fixed to the head plate 3 between the upper sprocket 6a' and the lower sprocket 6b'. Moreover, the lower sprocket 6b' is arranged at or below the lowermost position of the head plate 3, whereas the upper sprocket 6a is arranged at or above the uppermost position of the head plate 3, preferably at a same level with the opening actuator arrangement 5. In such an arrangement the opening actuator arrangement 5 is configured to rotate the upper sprocket 6a' in order to achieve the opening and closing movement.

In a horizontal plate pressure filter 1 according to a further embodiment of the present disclosure, the opening mechanism 6 may comprise a leadscrew (not illustrated) extending vertically at least between the opening actuator arrangement 5 and the head plate 3, and a nut (not illustrated) engaged to the leadscrew, so as to translate rotating motion of the lead screw to a linear motion of the nut. In such a case, the opening actuator arrangement being configured to rotate the leadscrew, while the nut is fixed to the head plate 3.

Preferably, such a leadscrew and nut would be provided at each distinct position.

It should be noted that also other opening mechanism may be envisaged. For example, a rack-and-pinion -type arrangement could be used. In such a case, preferably at each distinct position, there is a pinion, and a toothed rack that extends vertically at least between a lowermost position of the head plate 3 and an uppermost position of the head plate 3. The rack 6g would then be engaged to the pinion 6f so as to translate rotating motion of the pinion 6f into a linear movement of said pinion 6f. Moreover, the opening actuator arrangement 5 could then be attached to the head plate 3, and configured to rotate the pinion 6f.

Regardless of how the opening mechanism 6 is arranged, a horizontal plate pressure filter 1 according to a further embodiment of the present disclosure may comprise an equipment platform 7 supported above the head plate 3. In such a case, the opening actuator arrangement 5 is suitably arranged on the equipment platform 7.

In a horizontal plate pressure filter 1 according to a further embodiment of the present disclosure, the opening actuator arrangement 5 comprises, at each distinct position of the opening mechanism, an electric motor 5a operationally coupled to the opening mechanism 6 at said distinct position thereof.

Alternatively, the opening actuator arrangement 5 may comprise, for each opposing pair of distinct positions of the opening mechanism 6 at opposite sides of the filter plates 2, an electric motor 5a mechanically operationally coupled to the opening mechanism 6, at said pair of distinct positions thereof. This ensures, that the movement of the opening mechanism at said pair of distinct positions is synchronized, facilitating an even and level movement of the head plate 3. This in turn, reduces the risk of the head plate 3 or filter plates 2 getting jammed on the guider arrangement 10, or damage to the limited clearance arrangement due to uneven load distribution.

As a further alternative, the opening actuator 5 arrangement may comprise a single electric motor 5a mechanically operationally coupled to the opening mechanism 6, at each distinct position thereof. This ensures that the movement of the opening mechanism at each distinct position is synchronized, ensuring an even and level movement of the head plate 3. This in turn, minimizes the risk of the head plate 3 or filter plates 2 getting jammed on the guider arrangement 10, or damage to the limited clearance arrangement due to uneven load distribution.

In a horizontal plate pressure filter 1 according to a further embodiment of the present disclosure, the press actuator arrangement 9 may comprises at least a hydraulic cylinder 9a configured to press the tail plate 8 towards the head plate 3.

Alternatively, the press actuator arrangement 9 may comprise a leadscrew assembly (not illustrated) comprising a leadscrew and a nut element, said leadscrew assembly being configured to transform a rotation movement into a translational movement, so as to press the tail plate 8 towards the head plate 3. Such a press actuator arrangement 9 further comprises at least an electric motor operationally coupled to the leadscrew assembly for actuation thereof. Naturally, the press actuator arrangement 9 could be implemented by other similar components mechanically driven by an electric motor, such as a jackscrew or scissor jack etc.

Preferably, the press actuator arrangement 9 comprises a plurality of leadscrew assemblies, wherein the electric motor is mechanically operationally coupled to more than one leadscrew assembly. This ensures, that the plurality of leadscrew assemblies coupled to a respective electric motor have a synchronized movement and even distribution of pressing force with respect to each other.

Most suitably, the electric motor is mechanically operationally coupled to each leadscrew assembly. This ensures, that all of leadscrew assemblies coupled to the single electric motor have a synchronized movement and even distribution of pressing force with respect to each other.

In a horizontal plate pressure filter 1 according to a further embodiment of the present disclosure, the plate pressure filter 1 comprises a plurality of filter chambers, preferably 2-30 filter chambers, more preferably 4- 24 filter plates.

In a horizontal plate pressure filter 1 according to a further embodiment of the present disclosure, the opening actuator arrangement 5 and the opening mechanism 6 are configured such that the head plate 3 has, during an operation cycle of the pressure filter, a travel towards and away from the uppermost filter plate 2 of 200 mm - 2000 mm, more preferably 400 mm - 1500 mm, and most preferably 800 mm - 1000mm.

In a horizontal plate pressure filter 1 according to a further embodiment of the present disclosure, the press actuator arrangement 9 is configured such that tail plate 8 has, during an operation cycle of the pressure filter, a travel towards and away from the lowermost filter plate of 50 mm - 100 mm

It should be noted, that the present disclosure encompasses any combinations of the embodiments, and variant thereof, discussed above in accordance with the appended Claims.

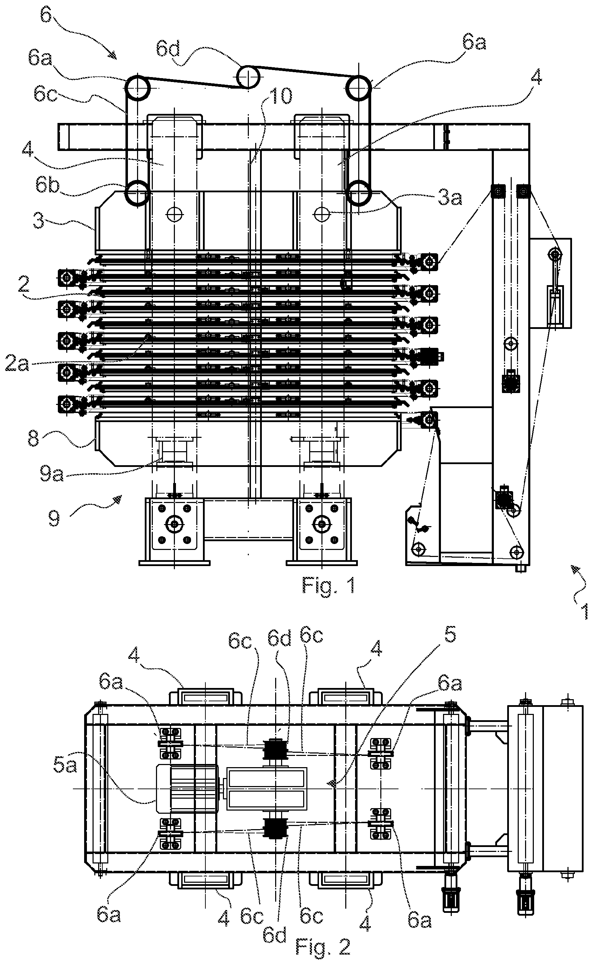

Figs. 1-3 schematically illustrates a horizontal plate pressure filter according to an embodiment of the present disclosure as seen from a lateral side, above and from an end side, respectively. Particularly, a plurality of filter plates 2 are arrange one above another so as to form filter chambers therebetween, while a head plate 3 is arrange above the uppermost filter plate 2.

The filter 1 has an opening actuator arrangement 5 has a single electric motor 5a coupled to a gear for providing an opening and closing movement. An output of shaft of the electric motor 5a is coupled an input shaft of the gearbox. The gearbox has two output shafts, each coupled to a respective drum 6d, so as to rotate the drum during the opening and closing movements.

Two elongate flexible members 6c, namely cables, are attached to each drum 6d. The cables 6c extend from the drum 6d to respective upper pulleys 6a directing the cables 6c towards respective lower pulleys 6b, which in turn are attached to the head plate 3. Form the second pulleys 6b, the cables 6c extend towards respective fixed points. The cables 6c are arranged to wind around the drum 6d during an opening movement and unwind during a closing movement, so as to mechanically transmit said opening and closing movements to the head plate 3, thereby lifting and lowering the head plate 3, respectively.

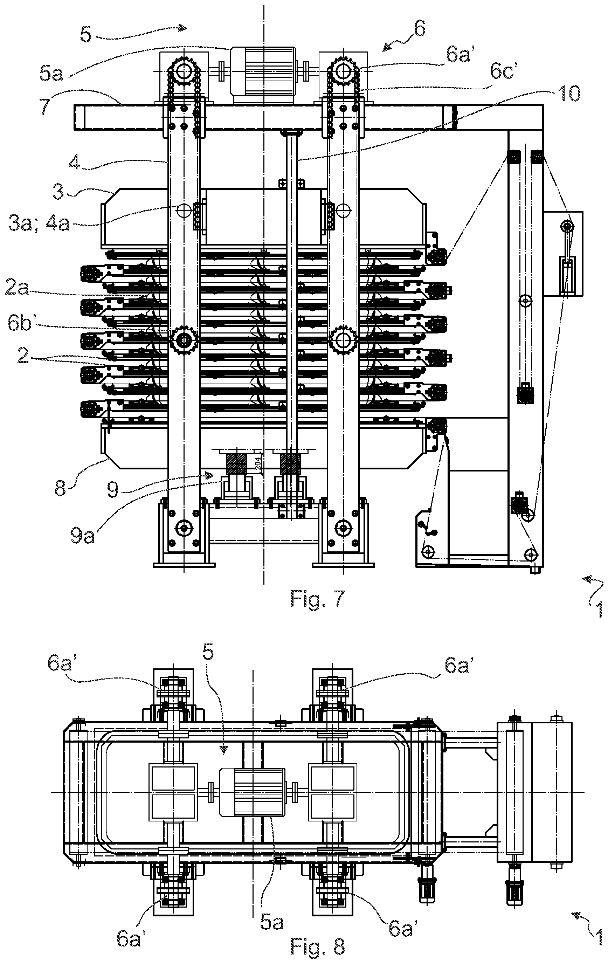

The movement of the head plate 3 is transmitted to the filter plates 2 below, and between adjacent filter plates 2, via a limited clearance arrangement 2a, as discussed above. In the embodiments illustrated in the appended drawings, the limited clearance arrangement 2a provided by a plurality of linkage plates that pivot towards and away from the head plate 3 or filter plate 2 when moved towards away from each other, respectively. The limited clearance arrangement is also more clearly visible in Fig. 7, showing an alternative embodiment of a horizontal plate pressure filter 1 in an open state thereof.

Moreover, a vertically extending guide arrangement 10 is provided for laterally supporting the filter plates and the head plate, and enabling the filter plates 2 and the head plate 3 to move away and towards from each other along said guide arrangement. This ensures, that the sideways position of adjacent plates 2, 3 remains aligned with respect to each other.

A support structure for selectively rigidly securing the head plate 3 has been provided as four vertically extending support columns 4, two at each lateral side of the filter 1. A locking arrangement having a locking pin 3a in connection with the head plate is configured to selectively engage with corresponding recesses 4a of the support columns 4, there by selectively rigidly securing the head plate 3 at least at a closed position thereof.

A tail plate 8 has been arranged below the lowermost filter plate 2, while a press actuator arrangement 9 having hydraulic cylinders 9a for pressing the tail plate 8 towards the filter plates 2. The press actuator arrangement 9 being configured to compress the filter plates 2 between the head plate 3, secured in its closed position, and tail plate 8, thereby sealing the filter chambers.

Fig. 4 schematically illustrates a pulley arrangement of the opening mechanism 6 of horizontal plate pressure filter 1 of Figs. 1-3. At each distinct position of the opening position, the cable 6c coming form drum 6d runs about the first pulley 6a towards the second pulley 6b. From the second pulley 6b, the cable 6c runs towards a further first pulley, and subsequently towards a further second pulley 6b. From the further second pulley 6b, the cable runs towards fixed point. The second pulley and the further second pulley are attached to the to the head plate 3. It should be noted, that Fig. 4 is a schematic illustration. Particularly, the first pulley 6a and the further first pulley 6a may be arranged side by side a respective block, whereas the second pulley 6b and the further second pulley 6b may correspondingly be arranged side by side in a different respective same block, as has been illustrated in Figs. 1-3.

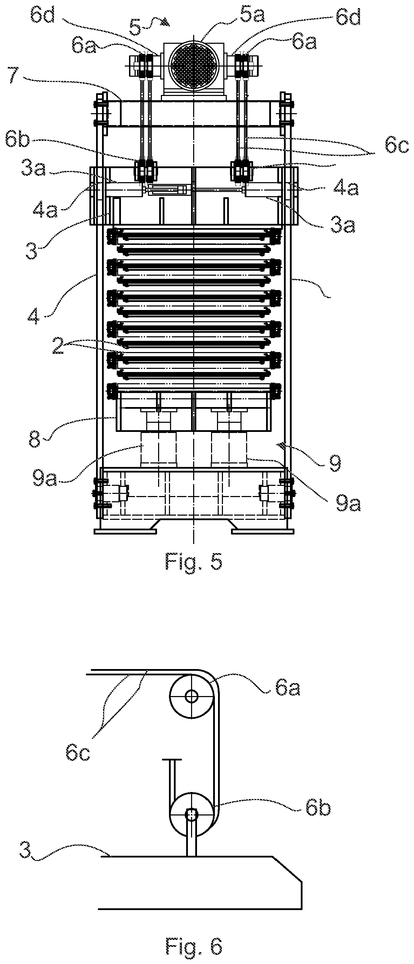

Fig. 5 schematically illustrates a horizontal plate pressure filter similar to that of Figs. 1-3 with the exception of the opening mechanism 6 having an alternative pulley arrangement. Particularly, the pulley arrangement 6 of Fig. 5 has been schematically illustrated in Fig. 6.

The pulley arrangement of Figs. 5 and 6 has, for each distinct position of the opening mechanism 6, two cables 6c extending form the drum 6d about the first pulley 6a, and subsequently about the second pulley 6b to a fixed point. The two cables 6c preferably run side by side, whereas either or both of the first pulley 6a and the second pulley may be provided as single pulley having dual grooves or two separate pulleys arranged side by side in respective blocks.

Figs. 7 and 8 in turn schematically illustrates a horizontal plate pressure filter according to an embodiment of the present disclosure as seen from a lateral side and above, respectively. The embodiment of Figs. 7 and 8 is similar to that of Figs. 1-3 with the exception of being equipped with an alternative opening actuator arrangement 5 and an alternative opening mechanism 6. Also, Fig. 7 illustrates a horizontal plate pressure filter an opne position thereof, while Figs. 1-3 and 5 illustrate a filter 1 in a closed position thereof.

Particularly, the flexible element 6c is provided, at each distinct position, as a chain 6c' extending between, and around, an upper sprocket 6a' and a lower sprocket 6b. The chain 6c' is then fixed to the head plate 3 between the upper sprocket 6a' and the lower sprocket 6b'. Moreover, the lower sprocket 6b' is arranged below the lowermost position of the head plate 3, whereas the upper sprocket 6a' is arranged above the uppermost position of the head plate 3, suitably at a same level with the opening actuator arrangement 5.

More clearly visible in Fig. 8, the opening actuator arrangement 5 has an electric motor 5a with an output shaft extending from opposing ends of the electric motor 5a. Both ends of the electric motor's 5a output shaft are coupled to input shafts of respective separate gearboxes, each having two opposing output shafts that are coupled to the upper sprockets 6a' for rotation thereof. That is, the single electric motor 5a is used to rotate all the upper sprockets 6a', and move the head plate 3.

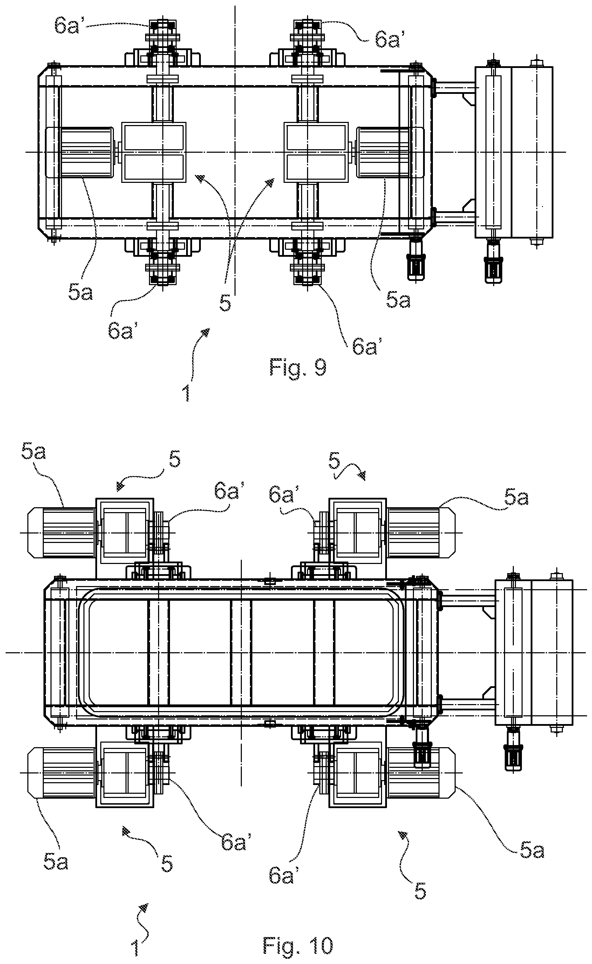

Fig 9 and Fig. 10 illustrate alternative opening actuator arrangement 5 for the horizontal plate pressure filter 1 of Fig. 7.

Particularly, Fig. 9 illustrates an opening actuator arrangement 5 with two electric motors 5a. The output shafts of both electric motors 5a are coupled to respective gearboxes, each having two output shafts coupled to the upper sprockets 6a' at the distinct positions of the opening mechanism 6.

Fig. 10, in turn, illustrates an opening actuator arrangement 5 with four electric motors 5a, i.e. one at each distinct position of the opening mechanism 6. Again, the output shafts of the electric motors 5a are coupled to respective gearboxes, which have their output shafts coupled to the upper sprockets 6a'.

It should be noted that the opening actuator arrangements of Fig. 9 and Fig. 10 could also be implemented in connection with the horizontal plate pressure filter of Fig. 1, in which case, the output shafts of the gearboxes would be coupled to drums 6d instead of upper sprockets 6a'.

As a more general remark, it should be noted that the although the present disclosure is discussed above with reference to drawings illustrating the electric motor 5a coupled to a gearbox, the horizontal plate pressure filter could alternatively be implemented such that the electric motor(s) 5a is directly coupled to the opening mechanism 6, without a gearbox.

## Claims

1. A horizontal plate pressure filter (1), comprising:
a plurality of superimposed filter plates (2) for forming a filter chamber between at least two adjacent filter plates;
a head plate (3) arranged above the uppermost filter plate;
an opening actuator arrangement (5) for providing an opening movement and a closing movement;
an opening mechanism (6) coupled to the opening actuator arrangement (5) and to the head plate (3), the opening mechanism (6) being configured to mechanically transmit the opening movement and the closing movement between the opening actuator arrangement (5) and the head plate (3), so as to move the head plate (3) away from, and respectively towards the uppermost filter plate (2);
a limited clearance arrangement (2a) coupled between the head plate (3) and the uppermost filter plate (2), and respectively, between adjacent filter plates (2), wherein the limited clearance arrangement (6) being configured to:
- allow the head plate (3) to abut the uppermost filter plate (2), and respectively, adjacent filter plates (2) to abut each other when moved towards each other, and
- allow a limited clearance to be formed between the head plate (3) and the uppermost filter plate (2), and respectively, between adjacent filter plates (2) when moved away from each other, and
a vertically extending guide arrangement (10) for laterally supporting the filter plates and the head plate, and enabling the filter plates (2) and the head plate (3) to move away and towards from each other along said guide arrangement, and
a support structure for selectively rigidly securing the head plate (3) thereto at least at a closed position of the head plate (3), the support structure comprising at least two vertically extending support columns (4) positioned at opposite lateral sides of the head plate (3)
**characterized by** the opening actuator arrangement (5) comprising an electric motor (5a), and
wherein the horizontal plate pressure filter further comprises:
a tail plate (8) arranged below the lowermost filter plate (2), and
a press actuator arrangement (9) for pressing the tail plate (8) towards the filter plates (2) so as to compress the filter plates (2) between the head plate (3) and tail plate (8) in order to seal said filter chambers.

2. The horizontal plate pressure filter according to Claim 1, **characterized by** the support structure comprising at least four vertically extending support columns (4), said support columns (4) being provided as opposing pairs at opposite lateral sides of the head plate plate (3).

3. The horizontal plate pressure filter according to any of the preceding Claims 1 or 2, **characterized by** the opening mechanism (6) extending vertically at a plurality of distinct positions, preferably along the support columns (4).

4. The horizontal plate pressure filter according to any of the preceding Claims 1-3, **characterized by** further comprising a locking arrangement for engaging the head plate (3) with the support structure (4) so as to selectively secure said head plate (3) to the support structure (4) at least at the closed position of the head plate (3)

5. The horizontal plate pressure filter according to Claim 4, **characterized by** the locking arrangement comprising, at the head plate, a locking pin configured to engage with a corresponding recess at the support structure.

6. The horizontal plate pressure filter according to any of the preceding Claims 1-5, **characterized in that** the opening mechanism (6) comprises an elongate flexible member (6c) configured to mechanically transmit the opening movement and the closing movement between the opening actuator arrangement (5) and the head plate (3).

7. The horizontal plate pressure filter according to Claim 6, **characterized by** the opening mechanism (6) comprising
one or more drums (6d) rotatable by the opening actuator arrangement (5), and
one or more elongate flexible elements (6c) being coupled to each drum (6d) so as to:
- wind therearound during an opening movement of the opening actuator arrangement (5), and
- unwind therefrom during a closing movement of the opening actuator arrangement (5),
wherein the flexible elements (6c') being further operationally coupled to the head plate (3) so as to transmit the opening movement and the closing movement between the opening actuator arrangement (5) and the head plate (3).

8. The horizontal plate pressure filter according to Claim 7 **characterized by** the opening mechanism (6) further comprising:
a first pulley (6a) corresponding to each distinct position, said first pulley (6a') being positioned above an uppermost position of the head plate (3),
wherein said one or more flexible elements (6c) extend from the drum (6d) about the first pulley (6a) towards the head plate (3).

9. The horizontal plate pressure filter according to Claim 8, **characterized in that** the opening mechanism (6) further comprises a second pulley (6b) corresponding to each distinct position, said second pulley (6b) being positioned below the first pulley (6a) and coupled to the head plate (3), and
wherein the at least one flexible element (6c) being coupled to the head plate (3) via the second pulley (6b).

10. The horizontal plate pressure filter according to Claim 6, **characterized by** the one or more flexible element (6c) being provided as, preferably at each distinct position, a chain (6c') extending between, and around, an upper sprocket (6a') and a lower sprocket (6b'), said chain (6c') being fixed to the head plate (3) between the upper sprocket (6a') and the lower sprocket (6b'),
wherein the lower sprocket (6b') being arranged at or below the lowermost position of the head plate (3), and the upper sprocket (6a') being arranged at or above the uppermost position of the head plate (3), preferably at a same level with the opening actuator arrangement (5), and
wherein the opening actuator arrangement (5) being configured to rotate the upper sprocket (6a').

11. The horizontal plate pressure filter (1) according to any of the precedgin Claims 1-5, **characterized by** the opening mechanism (6) comprising, preferably at each distinct position,
- a leadscrew (6d) extending vertically at least between the opening actuator arrangement (5) and the head plate (3), and
- a nut (6e) engaged to the leadscrew (6e), so as to translate rotating motion of the lead screw (6d) to a linear motion of the nut (6e),
wherein the opening actuator arrangement being configured to rotate the leadscrew (6d), and the nut (6e) being fixed to the head plate (3).

12. The horizontal plate pressure filter according to any of the preceding Claims 1-11, **characterized by** further comprising an equipment platform (7) supported above the head plate (3), wherein the opening actuator arrangement (5) being arranged on the equipment platform (7).

13. The horizontal plate pressure filter according to Claim 3-12, **characterized in that** the opening actuator arrangement (5) comprises, at each distinct position of the opening mechanism, an electric motor (5a) operationally coupled to the opening mechanism (6) at said distinct position thereof.

14. The horizontal plate pressure filter according to Claim 3-12, **characterized in that** the opening actuator arrangement (5) comprises, for each opposing pair of distinct positions of the opening mechanism (6) at opposite sides of the filter plates (2), an electric motor (5a) mechanically operationally coupled to the opening mechanism (6), at said pair of distinct positions thereof.

15. The horizontal plate pressure filter according to any of the preceding Claims 3-12, **characterized in that** the opening actuator (5) arrangement comprises a single electric motor (5a) mechanically operationally coupled to the opening mechanism (6), at each distinct position thereof.

16. The horizontal plate pressure filter according to any of the preceding Claims 1-15, **characterized in that** the press actuator arrangement (9) comprises at least a hydraulic cylinder (9a) configured to press the tail plate (8) towards the head plate (3).

17. The horizontal plate pressure filter according to Claim 1-15, **characterized in that** the press actuator arrangement (9) comprises:
a leadscrew assembly (9b) comprising a leadscrew and a nut element, said leadscrew assembly (9b) being configured to transform a rotation movement into a translational movement, so as to press the tail plate (8) towards the head plate (3), and
at least an electric motor (9c) operationally coupled to the leadscrew assembly (9b) for actuation thereof.

18. The horizontal plate pressure filter according to Claim 17, **characterized in that** the press actuator arrangement (9) comprises a plurality of leadscrew assemblies (9), and wherein the electric motor (9c) is mechanically operationally coupled to more than one leadscrew assembly (9b).

19. The horizontal plate pressure filter according to Claim 18, **characterized in that** the electric motor (9c) is mechanically operationally coupled to each leadscrew assembly (9b).

20. The horizontal plate pressure filter according to any of the preceding Claims 1-20, **characterized by** comprising a plurality of filter chambers, preferably 2-30 filter chambers, more preferably 4- 24 filter plates.

21. The horizontal plate pressure filter according to any of the preceding Claims 1-20, **characterized by** the opening actuator arrangement (5) and the opening mechanism (6) being configured such that the head plate (3) has, during an operation cycle of the pressure filter, a travel towards and away from the uppermost filter plate (2) of 200 mm - 2000 mm, more preferably 400 mm - 1500 mm, and most preferably 800 mm - 1000mm.

22. The horizontal plate pressure filter according to any of the preceding Claims 1-21, **characterized by** the press actuator arrangement (9) being configured such that tail plate (8) having, during an operation cycle of the pressure filter, a travel towards and away from the lowermost filter plate of 50 mm - 100 mm

## Patentansprüche

1. Horizontaler Plattendruckfilter (1) umfassend:
eine Mehrzahl übereinander angeordneter Filterplatten (2) zur Ausbildung einer Filterkammer zwischen mindestens zwei benachbarten Filterplatten;
eine oberhalb der obersten Filterplatte angeordnete Kopfplatte (3);
eine Öffnungsaktor-Anordnung (5) zum Bereitstellen einer Öffnungsbewegung und einer Schließbewegung;
einen mit der Öffnungsaktor-Anordnung (5) und der Kopfplatte (3) gekoppelten Öffnungsmechanismus (6), wobei der Öffnungsmechanismus (6) eingerichtet ist, die Öffnungsbewegung und die Schließbewegung zwischen der Öffnungsaktor-Anordnung (5) und der Kopfplatte (3) mechanisch zu übertragen, um so die Kopfplatte (3) von der obersten Filterplatte (2) weg beziehungsweise zu dieser hin zu bewegen;
eine zwischen der Kopfplatte (3) und der obersten Filterplatte (2) beziehungsweise zwischen benachbarten Filterplatten (2) zwischengeschaltete Abstandsbegrenzungsanordnung (2a), wobei die Abstandsbegrenzungsanordnung (6) so eingerichtet ist,
- dass sie es ermöglicht, dass die Kopfplatte (3) an die oberste Filterplatte (2) anstößt beziehungsweise benachbarte Filterplatten (2) aneinander anstoßen, wenn sie aufeinander zu bewegt werden, und
- dass sie es ermöglicht, dass zwischen der Kopfplatte (3) und der obersten Filterplatte (2) beziehungsweise zwischen benachbarten Filterplatten (2) ein begrenzter Abstand ausbildet wird, wenn sie voneinander weg bewegt werden, und
eine vertikal verlaufende Führungsanordnung (10) zur seitlichen Lagerung der Filterplatten und der Kopfplatte und zur Ermöglichung, dass sich die Filterplatten (2) und die Kopfplatte (3) entlang der Führungsanordnung voneinander weg und aufeinander zu bewegen, und
eine Tragstruktur, um daran die Kopfplatte (3) mindestens in einer geschlossenen Stellung der Kopfplatte (3) selektiv starr zu befestigen, wobei die Tragstruktur mindestens zwei vertikal verlaufende Tragsäulen (4) umfasst, die an gegenüberliegenden lateralen Seiten der Kopfplatte (3) positioniert sind,
**dadurch gekennzeichnet, dass** die Öffnungsaktor-Anordnung (5) einen Elektromotor (5a) umfasst, und
wobei der horizontale Plattendruckfilter ferner umfasst:
eine unterhalb der untersten Filterplatte (2) angeordnete Endplatte (8), und
eine Anpressaktor-Anordnung (9) zum Anpressen der Endplatte (8) hin zu den Filterplatten (2), um so die Filterplatten (2) zwischen der Kopfplatte (3) und Endplatte (8) zur Abdichtung der Filterkammern zusammenzudrücken.

2. Horizontaler Plattendruckfilter nach Anspruch 1, **dadurch gekennzeichnet, dass** die Tragstruktur mindestens vier vertikal verlaufende Tragsäulen (4) umfasst, wobei die Tragsäulen (4) als einander gegenüberliegende Paare an gegenüberliegenden lateralen Seiten der Kopfplatte (3) vorgesehen sind.

3. Horizontaler Plattendruckfilter nach einem der vorhergehenden Ansprüche 1 oder 2, **dadurch gekennzeichnet, dass** sich der Öffnungsmechanismus (6) vertikal an einer Mehrzahl diskreter Positionen, vorzugsweise entlang der Tragsäulen (4), erstreckt.

4. Horizontaler Plattendruckfilter nach einem der vorhergehenden Ansprüche 1 bis 3, **dadurch gekennzeichnet, dass** er ferner eine Verriegelungsanordnung zum Verrasten der Kopfplatte (3) mit der Tragstruktur (4) umfasst, um die Kopfplatte (3) mindestens in der geschlossenen Stellung der Kopfplatte (3) selektiv an der Tragstruktur (4) zu befestigen.

5. Horizontaler Plattendruckfilter nach Anspruch 4, **dadurch gekennzeichnet, dass** die Verriegelungsanordnung an der Kopfplatte einen Arretierstift umfasst, der dazu eingerichtet ist, in eine entsprechende Aussparung an der Tragstruktur einzugreifen.

6. Horizontaler Plattendruckfilter nach einem der vorhergehenden Ansprüche 1 bis 5, **dadurch gekennzeichnet, dass** der Öffnungsmechanismus (6) ein längliches flexibles Element (6c) umfasst, das eingerichtet ist, die Öffnungsbewegung und die Schließbewegung zwischen der Öffnungsaktor-Anordnung (5) und der Kopfplatte (3) mechanisch zu übertragen.

7. Horizontaler Plattendruckfilter nach Anspruch 6, **dadurch gekennzeichnet, dass** der Öffnungsmechanismus (6) umfasst:
einen oder mehrere Zylinder (6d), die von der Öffnungsaktor-Anordnung (5) gedreht werden können, und
ein oder mehrere längliche flexible Elemente (6c), die mit jedem Zylinder (6d) gekoppelt sind, sodass
- sie sich während einer Öffnungsbewegung der Öffnungsaktor-Anordnung (5) um diese herumwickeln und
- sie sich während einer Schließbewegung der Öffnungsaktor-Anordnung (5) von diesen loswickeln,
wobei die flexiblen Elemente (6c') ferner mit der Kopfplatte (3) betriebswirksam gekoppelt sind, um die Öffnungsbewegung und die Schließbewegung zwischen der Öffnungsaktor-Anordnung (5) und der Kopfplatte (3) zu übertragen.

8. Horizontaler Plattendruckfilter nach Anspruch 7, **dadurch gekennzeichnet, dass** der Öffnungsmechanismus (6) ferner umfasst:
eine erste Rolle (6a), die jeder diskreten Position entspricht, wobei die erste Rolle (6a') oberhalb einer obersten Position der Kopfplatte (3) positioniert ist,
wobei sich das eine oder die mehreren flexiblen Elemente (6c) vom Zylinder (6d) um die erste Rolle (6a) herum bis zur Kopfplatte (3) erstrecken.

9. Horizontaler Plattendruckfilter nach Anspruch 8, **dadurch gekennzeichnet, dass** der Öffnungsmechanismus (6) ferner eine zweite Rolle (6b) umfasst, die jeder diskreten Position entspricht, wobei die zweite Rolle (6b) unterhalb der ersten Rolle (6a) positioniert ist und mit der Kopfplatte (3) gekoppelt ist, und
wobei das mindestens eine flexible Element (6c) über die zweite Rolle (6b) mit der Kopfplatte (3) gekoppelt ist.

10. Horizontaler Plattendruckfilter nach Anspruch 6, **dadurch gekennzeichnet, dass** das eine oder die mehreren flexiblen Elemente (6c), vorzugsweise an jeder diskreten Position, als eine zwischen einem oberen Kettenrad (6a') und einem unteren Kettenrad (6b') und um diese herum verlaufende Kette (6c') vorgesehen sind, wobei die Kette (6c') zwischen dem oberen Kettenrad (6a') und dem unteren Kettenrad (6b') an der Kopfplatte (3) befestigt ist,
wobei das untere Kettenrad (6b') an oder unterhalb der untersten Position der Kopfplatte (3) angeordnet ist und das obere Kettenrad (6a') an oder oberhalb der obersten Position der Kopfplatte (3) angeordnet ist, vorzugsweise auf der gleichen Höhe wie die Öffnungsaktor-Anordnung (5), und
wobei die Öffnungsaktor-Anordnung (5) so eingerichtet ist, dass sie das obere Kettenrad (6a') dreht.

11. Horizontaler Plattendruckfilter (1) nach einem der vorhergehenden Ansprüche 1 bis 5, **dadurch gekennzeichnet, dass** der Öffnungsmechanismus (6), bevorzugt an jeder diskreten Position, umfasst:
- eine Gewindespindel (6d), die sich vertikal mindestens zwischen der Öffnungsaktor-Anordnung (5) und der Kopfplatte (3) erstreckt, und
- eine Mutter (6e), die in die Gewindespindel (6e) eingreift, um die Drehbewegung der Gewindespindel (6d) in eine lineare Bewegung der Mutter (6e) umzuwandeln,
wobei die Öffnungsaktor-Anordnung zum Drehen der Gewindespindel (6d) eingerichtet ist und die Mutter (6e) an der Kopfplatte (3) befestigt ist.

12. Horizontaler Plattendruckfilter nach einem der vorhergehenden Ansprüche 1 bis 11, **dadurch gekennzeichnet, dass** er ferner eine oberhalb der Kopfplatte (3) aufgelagerte Geräteplattform (7) umfasst, wobei die Öffnungsaktor-Anordnung (5) auf der Geräteplattform (7) angeordnet ist.

13. Horizontaler Plattendruckfilter nach Anspruch 3 bis 12, **dadurch gekennzeichnet, dass** die Öffnungsaktor-Anordnung (5) an jeder diskreten Position des Öffnungsmechanismus einen Elektromotor (5a) umfasst, der mit dem Öffnungsmechanismus (6) an dessen diskreter Position betriebswirksam gekoppelt ist.

14. Horizontaler Plattendruckfilter nach Anspruch 3 bis 12, **dadurch gekennzeichnet, dass** die Öffnungsaktor-Anordnung (5), für jedes gegenüberliegende Paar von diskreten Positionen des Öffnungsmechanismus (6) auf gegenüberliegenden Seiten der Filterplatten (2), einen Elektromotor (5a) umfasst, der betriebswirksam mit dem Öffnungsmechanismus (6) an dessen Paar von diskreten Positionen mechanisch gekoppelt ist.

15. Horizontaler Plattendruckfilter nach einem der vorhergehenden Ansprüche 3 bis 12, **dadurch gekennzeichnet, dass** die Öffnungsaktor-Anordnung (5) einen einzigen Elektromotor (5a) umfasst, der betriebswirksam mit dem Öffnungsmechanismus (6) an jeder diskreten Position desselben mechanisch gekoppelt ist.

16. Horizontaler Plattendruckfilter nach einem der vorhergehenden Ansprüche 1 bis 15, **dadurch gekennzeichnet, dass** die Anpressaktor-Anordnung (9) mindestens einen hydraulischen Zylinder (9a) umfasst, der eingerichtet ist, die Endplatte (8) hin zur Kopfplatte (3) anzupressen.

17. Horizontaler Plattendruckfilter nach Anspruch 1 bis 15, **dadurch gekennzeichnet, dass** die Anpressaktor-Anordnung (9) umfasst:
eine Gewindespindel-Anordnung (9b), die eine Gewindespindel und ein Mutternelement umfasst, wobei die Gewindespindel-Anordnung (9b) eingerichtet ist, eine Rotationsbewegung in eine Translationsbewegung umzuwandeln, um die Endplatte (8) in Richtung der Kopfplatte (3) anzupressen, und
mindestens einen Elektromotor (9c), der mit der Gewindespindel-Anordnung (9b) betriebswirksam gekoppelt ist, um diese zu betätigen.

18. Horizontaler Plattendruckfilter nach Anspruch 17, **dadurch gekennzeichnet, dass** die Anpressaktor-Anordnung (9) eine Mehrzahl von Gewindespindel-Anordnungen (9) umfasst, und wobei der Elektromotor (9c) betriebswirksam mit mehr als einer Gewindespindel-Anordnung (9b) mechanisch gekoppelt ist.

19. Horizontaler Plattendruckfilter nach Anspruch 18, **dadurch gekennzeichnet, dass** der Elektromotor (9c) betriebswirksam mit jeder Gewindespindel-Anordnung (9b) mechanisch gekoppelt ist.

20. Horizontaler Plattendruckfilter nach einem der vorhergehenden Ansprüche 1 bis 20, **dadurch gekennzeichnet, dass** er eine Mehrzahl von Filterkammern, bevorzugt 2-30 Filterkammern, bevorzugter 4-24 Filterplatten, umfasst.

21. Horizontaler Plattendruckfilter nach einem der vorhergehenden Ansprüche 1 bis 20, **dadurch gekennzeichnet, dass** die Öffnungsaktor-Anordnung (5) und der Öffnungsmechanismus (6) dergestalt eingerichtet sind, dass die Kopfplatte (3) während eines Betriebszyklus des Druckfilters einen Laufweg von 200 mm - 2000 mm, bevorzugter 400 mm - 1500 mm, und höchstbevorzugt 800 mm - 1000 mm, hin zu und weg von der obersten Filterplatte (2) aufweist.

22. Horizontaler Plattendruckfilter nach einem der vorhergehenden Ansprüche 1 bis 21, **dadurch gekennzeichnet, dass** die Anpressaktor-Anordnung (9) dergestalt eingerichtet ist, dass die Endplatte (8) während eines Betriebszyklus des Druckfilters einen Laufweg von 50 mm - 100 mm hin zu und weg von der untersten Filterplatte aufweist.

## Revendications

1. Filtre-presse horizontal à plaques (1) comprenant :
une pluralité de plaques filtrantes (2) superposées pour former une chambre filtrante entre au moins deux plaques filtrantes adjacentes;
une plaque de tête (3) disposée au-dessus de la plaque filtrante supérieure;
un agencement d'actionneur d'ouverture (5) pour fournir un mouvement d'ouverture et un mouvement de fermeture;
un mécanisme d'ouverture (6) couplé à l'agencement d'actionneur d'ouverture (5) et à la plaque de tête (3), ledit mécanisme d'ouverture (6) étant configuré pour transmettre mécaniquement le mouvement d'ouverture et le mouvement de fermeture entre l'agencement d'actionneur d'ouverture (5) et la plaque de tête (3) afin de rapprocher ou, respectivement, éloigner la plaque de tête (3) de la plaque filtrante (2) supérieure;
un agencement d'espace limité (2a) couplé entre la plaque de tête (3) et la plaque filtrante (2) supérieure et, respectivement, entre plaques filtrantes (2) adjacentes, ledit agencement d'espace limité (6) étant configuré pour
- permettre à la plaque de tête (3) d'entrer en contact avec la plaque filtrante (2) supérieure ou, respectivement, aux plaques filtrantes (2) adjacentes d'entrer en contact entre elles lorsqu'elles sont rapprochées les unes des autres, et
- permettre la formation d'un espace limité entre la plaque de tête (3) et la plaque filtrante (2) supérieure et, respectivement, entre les plaques filtrantes (2) adjacentes, lorsqu'elles sont éloignées les unes des autres, et
un agencement de guidage (10) à extension verticale pour soutenir latéralement les plaques filtrantes et la plaque de tête, et pour permettre aux plaques filtrantes (2) et à la plaque de tête (3) de se rapprocher ou de s'éloigner les unes des autres le long dudit agencement de guidage, et
une structure d'appui pour y fixer rigidement, de manière sélective, la plaque de tête (3) au moins dans une position fermée de la plaque de tête (3), ladite structure d'appui comprenant au moins deux colonnes d'appui (4) à extension verticale positionnées des côtés latéraux opposés de la plaque de tête (3),
**caractérisé en ce que** l'agencement d'actionneur d'ouverture (5) comprend un moteur électrique (5a), et
ledit filtre-presse horizontal à plaques comprenant également :
une plaque de queue (8) disposée au-dessous de la plaque filtrante (2) inférieure, et
un agencement d'actionneur presseur (9) pour forcer la plaque de queue (8) vers les plaques filtrantes (2) afin de comprimer les plaques filtrantes (2) entre la plaque de tête (3) et la plaque de queue (8) pour étancher les chambres filtrantes.

2. Filtre-presse horizontal à plaques selon la revendication 1, **caractérisé en ce que** la structure d'appui comprend au moins quatre colonnes d'appui (4) à extension verticale, lesdites colonnes d'appui (4) étant prévues comme paires opposées sur des côtés latéraux opposés de la plaque de tête (3).

3. Filtre-presse horizontal à plaques selon l'une des revendications précédentes 1 ou 2, **caractérisé en ce que** le mécanisme d'ouverture (6) s'étend verticalement sur une pluralité de positions distinctes, préférablement le long des colonnes d'appui (4).

4. Filtre-presse horizontal à plaques selon l'une des revendications précédentes 1 à 3, **caractérisé en ce qu'**il comprend également un agencement de verrouillage pour engager la plaque de tête (3) dans la structure d'appui (4) afin de fixer la plaque de tête (3) de manière sélective à la structure d'appui (4) au moins dans la position fermée de la plaque de tête (3).

5. Filtre-presse horizontal à plaques selon la revendication 4, **caractérisé en ce que** l'agencement de verrouillage comprend, sur la plaque de tête, une goupille de verrouillage configurée pour s'engager dans une échancrure correspondante sur la structure d'appui.

6. Filtre-presse horizontal à plaques selon l'une des revendications précédentes 1 à 5, **caractérisé en ce que** le mécanisme d'ouverture (6) comprend un membre souple allongé (6c) configuré pour transmettre mécaniquement le mouvement d'ouverture et le mouvement de fermeture entre l'agencement d'actionneur d'ouverture (5) et la plaque de tête (3).

7. Filtre-presse horizontal à plaques selon la revendication 6, **caractérisé en ce que** le mécanisme d'ouverture (6) comprend :
un ou plusieurs rouleaux (6d) pouvant être mis en rotation par l'agencement d'actionneur d'ouverture, et
un ou plusieurs éléments souples allongés (6c) couplés à chaque rouleau (6d) de manière à
- s'enrouler autour d'eux pendant un mouvement d'ouverture de l'agencement d'actionneur d'ouverture (5), et
- se dérouler d'eux pendant un mouvement de fermeture de l'agencement d'actionneur d'ouverture (5),
lesdits membres souples (6c') étant également couplés opérationnellement à la plaque de tête (3) pour transmettre le mouvement d'ouverture et le mouvement de fermeture entre l'agencement d'actionneur d'ouverture (5) et la plaque de tête (3).

8. Filtre-presse horizontal à plaques selon la revendication 7, **caractérisé en ce que** le mécanisme d'ouverture (6) comprend également :
une première poulie (6a) correspondant à chaque position distincte, ladite première poulie (6a') étant positionnée au-dessus d'une position haute de la plaque de tête (3),
lesdits un ou plusieurs éléments souples (6c) s'étendant à partir du rouleau (6d) autour de la première poulie (6a) jusqu'à la plaque de tête (3).

9. Filtre-presse horizontal à plaques selon la revendication 8, **caractérisé en ce que** le mécanisme d'ouverture (6) comprend également une deuxième poulie (6b) correspondant à chaque position distincte, ladite deuxième poulie (6b) étant positionnée au-dessous de la première poulie (6a) et couplée à la plaque de tête (3), et
ledit au moins un élément souple (6c) étant couplé à la plaque de tête (3) via la deuxième poulie (6b).

10. Filtre-presse horizontal à plaques selon la revendication 6, **caractérisé en ce que** lesdits un ou plusieurs éléments souples (6c) sont prévus, préférablement dans chaque position distincte, comme une chaîne (6c') s'étendant entre, et autour de, une roue de chaîne supérieure (6a') et une roue de chaîne inférieure (6b'), ladite chaîne (6c') étant fixée à la plaque de tête (3) entre la roue de chaîne supérieure (6a') et la roue de chaîne inférieure (6b'),
ladite roue de chaîne inférieure (6b') étant disposée dans ou au-dessous de la position basse de la plaque de tête (3), et ladite roue de chaîne supérieure (6a') étant disposée dans ou au-dessus de la position haute de la plaque de tête (3), préférablement au même niveau que l'agencement d'actionneur d'ouverture (5), et
ledit agencement d'actionneur d'ouverture (5) étant configurée pour tourner la roue de chaîne supérieure (6a').

11. Filtre-presse horizontal à plaques (1) selon l'une des revendications précédentes 1 à 5, **caractérisé en ce que** le mécanisme d'ouverture (6) comprend, préférablement dans chaque position distincte :
- une vis-mère (6d) s'étendant verticalement au moins entre l'agencement d'actionneur d'ouverture (5) et la plaque de tête (3), et
- un écrou (6e) engagé sur la vis-mère (6e) pour transformer le mouvement rotatif de la vis-mère (6d) en un mouvement linéaire de l'écrou (6e),
ledit agencement d'actionneur d'ouverture étant configuré pour tourner la vis-mère (6d) et ledit écrou (6e) étant fixé à la plaque de tête (3).

12. Filtre-presse horizontal à plaques selon l'une des revendications précédentes 1 à 11, **caractérisé en ce qu'**il comprend également un plateau d'équipement (7) logé au-dessus de la plaque de tête (3), ledit agencement d'actionneur d'ouverture (5) étant disposé sur le plateau d'équipement (7).

13. Filtre-presse horizontal à plaques selon la revendication 3 à 12, **caractérisé en ce que** l'agencement d'actionneur d'ouverture (5) comprend, dans chaque position distincte du mécanisme d'ouverture, un moteur électrique (5a) couplé opérationnellement au mécanisme d'ouverture (6) dans la position distincte de celui-ci.

14. Filtre-presse horizontal à plaques selon la revendication 3 à 12, **caractérisé en ce que** l'agencement d'actionneur d'ouverture (5) comprend, pour chaque paire opposée de positions distinctes du mécanisme d'ouverture (6) sur des côtés opposés des plaques filtrantes (2), un moteur électrique (5a) couplé opérationnellement de manière mécanique au mécanisme d'ouverture (6) dans ladite paire de positions distinctes de celui-ci.

15. Filtre-presse horizontal à plaques selon l'une des revendications précédentes 3 à 12, **caractérisé en ce que** l'agencement d'actionneur d'ouverture (5) comprend un seul moteur électrique (5a) couplé opérationnellement de manière mécanique au mécanisme d'ouverture (6) dans chaque position distincte de celui-ci.

16. Filtre-presse horizontal à plaques selon l'une des revendications précédentes 1 à 15, **caractérisé en ce que** l'agencement d'actionneur presseur (9) comprend au moins un vérin hydraulique (9a) configuré pour forcer la plaque de queue (8) vers la plaque de tête (3).

17. Filtre-presse horizontal à plaques selon la revendication 1 à 15, **caractérisé en ce que** l'agencement d'actionneur presseur (9) comprend :
un ensemble de vis-mère (9b) comprenant une vis-mère et un élément d'écrou, ledit ensemble de vis-mère (9b) étant configuré pour transformer un mouvement rotatif en un mouvement translatif afin de forcer la plaque de queue (8) vers la plaque de tête (3), et
au moins un moteur électrique (9c) couplé opérationnellement à l'ensemble de vis-mère (9b) pour l'actionner.

18. Filtre-presse horizontal à plaques selon la revendication 17, **caractérisé en ce que** l'agencement d'actionneur presseur (9) comprend une pluralité d'ensembles de vis-mère (9), et dans lequel le moteur électrique (9c) est couplé opérationnellement de manière mécanique à plus d'un ensemble de vis-mère (9b).

19. Filtre-presse horizontal à plaques selon la revendication 18, **caractérisé en ce que** le moteur électrique (9c) est couplé opérationnellement de manière mécanique à chaque ensemble de vis-mère (9b).

20. Filtre-presse horizontal à plaques selon l'une des revendications précédentes 1 à 20, **caractérisé en ce qu'**il comprend une pluralité de chambres filtrantes, préférablement 2 à 30 chambres filtrantes, plus préférablement 4 à 24 plaques filtrantes.

21. Filtre-presse horizontal à plaques selon l'une des revendications précédentes 1 à 20, **caractérisé en ce que** l'agencement d'actionneur d'ouverture (5) et le mécanisme d'ouverture (6) sont configurés de telle façon que, pendant un cycle opérationnel du filtre-presse, la plaque de tête (3) présente une course, vers et depuis la plaque filtrante (2) supérieure, de 200 mm à 2000 mm, plus préférablement de 400 mm à 1500 mm, et le plus préférablement de 800 mm à 1000 mm.

22. Filtre-presse horizontal à plaques selon l'une des revendications précédentes 1 à 21, **caractérisé en ce que** l'agencement d'actionneur presseur (9) est configuré de telle façon que, pendant un cycle opérationnel du filtre-presse, la plaque de queue (8) présente une course, vers et depuis la plaque filtrante (2) inférieure, de 50 mm à 100 mm.
